(19) Europäisches Patentamt / European Patent Office / Office européen des brevets

(11) **EP 4 477 707 B1**

(12) **EUROPEAN PATENT SPECIFICATION**

(45) Date of publication and mention
of the grant of the patent:
**22.07.2026 Bulletin 2026/30**

(21) Application number: **23780549.4**

(22) Date of filing: **28.03.2023**

(51) International Patent Classification (IPC):
*C08F 220/14* (2006.01)    *B65D 65/00* (2006.01)
*C08F 212/08* (2006.01)    *C08L 33/12* (2006.01)
*C08L 25/14* (2006.01)    *C08F 2/38* (2006.01)

(52) Cooperative Patent Classification (CPC):
(C-Sets available)
**C08F 212/08; C08F 2/06; C08F 2/38; C08F 4/34;
C08F 220/14; C08L 33/12;** C08L 25/14    (Cont.)

(86) International application number:
**PCT/JP2023/012563**

(87) International publication number:
**WO 2023/190540 (05.10.2023 Gazette 2023/40)**

(54) **RESIN COMPOSITION CONTAINING COPOLYMER, METHOD FOR PRODUCING SAME AND MOLDED BODY OF SAME**

HARZZUSAMMENSETZUNG MIT COPOLYMER, VERFAHREN ZUR HERSTELLUNG DAVON UND FORMKÖRPER DARAUS

COMPOSITION DE RÉSINE CONTENANT UN COPOLYMÈRE, PROCÉDÉ DE PRODUCTION ASSOCIÉ ET CORPS MOULÉ LA COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **30.03.2022 JP 2022057403**

(43) Date of publication of application:
**18.12.2024 Bulletin 2024/51**

(73) Proprietor: **Denka Company Limited
Tokyo 103-8338 (JP)**

(72) Inventors:
• **SUN, Yushun
Tokyo 103-8338 (JP)**
• **WATANABE, Wataru
Tokyo 103-8338 (JP)**

(74) Representative: **Gulde & Partner
Patent- und Rechtsanwaltskanzlei mbB
Berliner Freiheit 2
10785 Berlin (DE)**

(56) References cited:
WO-A1-2014/010137    WO-A1-2016/129675
JP-A- 2001 026 619    JP-A- 2001 026 619
JP-A- 2001 031 046    JP-A- 2002 212 233
JP-A- 2002 212 233    JP-A- 2017 119 776
US-A- 5 980 790    US-A1- 2016 355 625

     **(Cont. next page)**

(52) Cooperative Patent Classification (CPC): (Cont.)

C-Sets
**C08F 212/08, C08F 220/14, C08F 212/12;**
**C08F 212/08, C08F 220/14, C08F 212/32;**
C08F 220/14, C08F 212/08, C08F 212/12

## Description

Technical Field

The present invention relates to a resin composition containing a copolymer containing a styrene-based monomer unit and a (meth)acrylic acid ester-based monomer unit, the resin composition having excellent safety for cosmetic and food packaging applications, productivity, and injection moldability, as well as excellent hue and light resistance of molded products, and having a low odor.

Background Art

Styrene-based resins, represented by polystyrene, are used for household goods, toys, housing materials for OA equipment, food packaging containers, and other applications because of their excellent hue, stiffness, moldability, and the like, as well as their low cost. In particular, since they are non-toxic and safe materials with excellent processing properties such as sheet processability, foaming properties, and vacuum moldability, they have been widely used for applications such as food packaging containers.

In JP 2001 26 616 A, JP 2001 31 046 A and JP 2002 212 233 A, it is disclosed that the productivity, appearance, and the odor of copolymers during molding and processing can be improved by reducing an amount of a residual unreacted monomer, and an amount of styrene dimer and styrene trimer contained as by-products, as well as a sulfur content based on the sulfur-based chain transfer agent in the copolymer containing a styrene-based monomer unit and a (meth)acrylic acid ester monomer unit to a predetermined amount or less. Further, it is disclosed that by using a multifunctional organic peroxide or two or more types of monofunctional organic peroxides as essential components in the polymerization initiator, there is an enough amount of the polymerization initiator in the high conversion region to suppress the formation of styrene dimer and trimer, and to suppress a large amount of the residual monomer and the loss of productivity. JP2001026619A, US5980790A and US2016/355625A1 also disclose resin compositions comprising copolymers of methyl methacrylate and styrene used for making molded objects.

## Summary of Invention

### Technical Problem

An object of the present invention, as defined in the appended claims, is to provide a resin composition containing a copolymer containing a styrene-based monomer unit and a (meth)acrylic acid ester-based monomer unit, the resin composition having excellent safety for cosmetic and food packaging applications, productivity, and injection moldability, as well as excellent hue and light resistance of molded products, and having a low odor.

### Solution to Problem

The present inventors have conducted studies and found that, in the copolymer containing a styrene-based monomer unit and a (meth)acrylic ester monomer unit, if a total unreacted monomer content, a sulfur content, and a yellowness index (YI) of a 2 mm thick injection-molded plate are within a predetermined range, a resin composition containing a copolymer containing a styrene-based monomer unit and a (meth)acrylic acid ester-based monomer unit can be obtained, the resin composition having excellent safety for cosmetic and food packaging applications, productivity, and injection moldability, as well as excellent hue and light resistance of molded products, and having a low odor.

The present invention relates to a resin composition containing a copolymer containing a styrene-based monomer unit and a (meth)acrylic acid ester-based monomer unit, wherein:

> a total content of an unreacted monomer is 2000 mass ppm or less,
> a sulfur content is more than 0 mass ppm and 150 mass ppm or less, and
> a yellowness index of a 2 mm thick injection molded plate is 0.6 or less, wherein the resin composition satisfies a relationship described below when the yellowness index of the 2 mm thick injection molded plate is taken as A, and a yellowness index of the plate after UV irradiation for 360 hours at an irradiation intensity of 60 W/m is taken as B,

$$B-A < 0.8.$$

Preferably, 100000 times a reciprocal of a product of the total content of the unreacted monomer and the sulfur content (100000 / (the total content of the unreacted monomer $\times$ the sulfur content)) may be 0.5 to 8.0.

Further preferred, a ratio of the total content of the unreacted monomer to the sulfur content (the total content of the unreacted monomer / the sulfur content) may be 8 to 50.

Further preferred, a MFR value under a condition of a test temperature of 200°C and a nominal load of 5 kg may be 1 g/10 min to 5 g/10 min.

Further preferred, 100 mass% of the copolymer may comprise 20 to 80 mass% of the styrene-based monomer unit and 20 to 80 mass% of the (meth)acrylic acid ester-based monomer unit.

Further preferred, the styrene-based monomer unit may be styrene, and the (meth)acrylic acid ester-based monomer unit may be methyl methacrylate.

Further preferred, the sulfur content may be 30 mass ppm or more.

Further preferred, a total content of the styrene-based monomer unit and the (meth)acrylic acid ester-based monomer unit contained in 100 mass% of the copolymer may be more than 96 mass%.

Further preferred, the copolymer may further comprise an other copolymerizable monomer unit, wherein

a content of the other copolymerizable monomer unit is 0 to 10 mass% with respect to 100 mass% of a total of the styrene-based monomer unit, the (meth)acrylic acid ester-based monomer unit, and the other copolymerizable monomer unit, and

the other copolymerizable monomer unit comprises one or more types selected from a group consisting of acrylic acid, acrylonitrile, methacrylonitrile, butyl acrylate, ethyl acrylate, methyl acrylate, phenylmaleimide, and cyclohexylmaleimide.

The present invention further relates to a method for producing the resin composition as described above,

comprising polymerizing a styrene-based monomer and a (meth)acrylic acid ester-based monomer,

wherein a linear alkyl mercaptan-based chain transfer agent and an $\alpha$-methylstyrene dimer chain transfer agent are used in combination in the polymerizing,

Preferably, a ratio of an amount of the linear alkyl mercaptan-based chain transfer agent added to an amount of the $\alpha$-methylstyrene dimer chain transfer agent added may be 0.08 to 0.25.

Further, the present invention relates to an injection molded body using the resin composition as described above.

Preferably, a home appliance housing or a container for food, stationery, or cosmetics, using the injection molded body as described before.

Advantageous Effects of Invention

According to the present invention, it is possible to provide a resin composition containing a copolymer containing a styrene-based monomer unit and a (meth)acrylic acid ester-based monomer unit, the resin composition having excellent safety for cosmetic and food packaging applications, productivity, and injection moldability, as well as excellent hue and light resistance of molded products, and having a low odor.

**Description of Embodiments**

<Explanation of Terms>

In the present specification, for example, the description "A to B" means A or more and B or less.

<Copolymer Containing Styrene-based Monomer Unit and (Meth)acrylic Acid Ester-based Monomer Unit>

The copolymer containing the styrene-based monomer unit and the (meth)acrylic acid ester-based monomer unit of the present embodiment contains monomer units derived from each of the styrene-based monomer and the (meth)acrylic ester-based monomer. In the present specification, the copolymer containing the styrene-based monomer unit and the (meth)acrylic acid ester-based monomer unit may also be simply referred to as "copolymer P". The copolymer P of the present embodiment may also contain an other copolymerizable monomer unit other than the styrene-based monomer unit and the (meth)acrylic acid ester-based monomer unit to the extent that the effects of the present invention are not inhibited.

Hereinafter, the monomer units constituting the copolymer P of the present embodiment are described.

<Styrene-based Monomer Unit>

The styrene-based monomer unit is a constituent unit of the copolymer P derived from the styrene-based monomer used in the copolymerization. Examples of the styrene-based monomer include styrene, α-methylstyrene, and styrene with a benzene nucleus partially substituted with an alkyl group. In one aspect, among these, styrene is preferred in terms of stiffness and moldability. One of these styrene-based monomers may be used alone, or two or more types of these may be used in combination.

The copolymer P of the present embodiment preferably contains 20 to 80 mass% of the styrene-based monomer unit in 100 mass% of the copolymer P. More preferably, it contains 30 to 70 mass% of the styrene-based monomer unit, and even more preferably 35 to 55 mass%. Specifically, for example, it preferably contains 20, 25, 30, 35, 40, 45, 50, 55, 60, 65, 70, 75 or 80 mass%, and may be in the range between any two of the values exemplified herein. If an amount of the styrene-based monomer unit is less than 30 mass%, the molding processability may be insufficient, and if it is more than 70 mass%, the hue may be insufficient. The content of the styrene-based monomer unit in the copolymer P is calculated from the mass of the styrene-based monomer to the mass of all monomers used in the polymerization. Further, it can also be calculated by performing, for example, 1H-NMR measurement of the obtained copolymer P.

Note that when styrene-based monomer units are used in combination, the content of styrene-based monomer unit means a total amount of styrene-based monomer units used in combination.

<(Meth)acrylic Acid Ester-based Monomer Unit>

The (meth)acrylic acid ester-based monomer unit is a constituent unit of the copolymer P derived from (meth) acrylic ester-based monomer used for copolymerization. Examples of the (meth)acrylic acid ester-based monomer unit include methacrylic acid esters such as methyl methacrylate, ethyl methacrylate, butyl methacrylate, 2-ethylhexyl methacrylate, and acrylic acid esters such as methyl acrylate, ethyl acrylate, n-butyl acrylate, 2-methylhexyl acrylate, 2-ethylhexyl acrylate, and decyl acrylate. In one aspect, methyl methacrylate is preferable among these from the viewpoint of cost, hue, and heat resistance. One of these (meth)acrylic acid ester-based monomers may be used alone, or two or more types of these may be used in combination.

The copolymer P of the present embodiment preferably contains 20 to 80 mass% of (meth)acrylic acid ester-based monomer unit in 100 mass% of the copolymer P. More preferably, it contains 30 to 70 mass% of (meth)acrylic acid ester-based monomer unit, and even more preferably 45 to 65 mass%. Specifically, for example, it preferably contains 20, 25, 30, 35, 40, 45, 50, 55, 60, 65, 70, 75 or 80 mass%, and may be in the range between any two of the values exemplified herein. If an amount of (meth)acrylic acid ester-based monomer unit is less than 40 mass%, hue and surface strength may be insufficient, and if it exceeds 70 mass%, water absorption, deformation rate (water absorption property) and moldability may be insufficient. The content of (meth)acrylic acid ester-based monomer unit in the copolymer P is determined by the mass of (meth)acrylic acid ester-based monomer unit to the mass of total monomer used in the polymerization. Further, it can be calculated by performing, for example, 1H-NMR measurement of the obtained copolymer P.

Note that when (meth)acrylic acid ester-based monomer units are used in combination, the content of (meth) acrylic acid ester-based monomer unit means a total amount of (meth)acrylic acid ester-based monomer units used in combination.

<Other Copolymerizable Monomer Unit>

The copolymer P of the present embodiment may optionally contain an other copolymerizable monomer unit other than the styrene-based monomer unit and the (meth)acrylic acid ester-based monomer unit, to the extent that the effects of the present invention are not inhibited. Examples of the other copolymerizable monomer unit include acrylic acid, acrylonitrile, methacrylonitrile, butyl acrylate, ethyl acrylate, methyl acrylate, phenylmaleimide, and cyclohexylmaleimide. One of these other copolymerizable monomer units may be used alone, or two or more types of these may be used in combination.

The content of the other copolymerizable monomer unit to the total 100 mass% of the styrene-based monomer unit, the (meth)acrylic acid ester-based monomer unit, and the other copolymerizable monomer unit is preferably 0 to 10 mass%, and more preferably 8 mass% or less.

The total content of the styrene-based monomer unit and the (meth)acrylic acid ester-based monomer unit in 100 mass% of the copolymer P of the present embodiment is preferably more than 96 mass%, and more preferably 98 mass% or more. In one embodiment, the copolymer P consists substantially only of the styrene-based monomer unit and the (meth)acrylic acid ester-based monomer unit. Note that "consist substantially only of the styrene monomer units and (meth)acrylic ester monomer units" means that other components may be contained only to the extent that the effect of the present invention is not inhibited by other components other than the styrene monomer unit and the (meth)acrylic ester monomer unit, and typically, the total content of the styrene-based monomer unit and the (meth)acrylic acid ester-based monomer unit in 100 mass% of the copolymer P is in the range of 100.0 to 99.5 mass%.

Note that the other components are not limited to those exemplified in "Other Copolymerizable Monomer Unit" above. When the other components are used in combination, the content of other components means a total amount of the other components used in combination.

The content of the methacrylic acid monomer unit contained in 100 mass% of the copolymer P of the present embodiment is preferably less than 4 mass%, and more preferably less than 2 mass%.

<Unreacted Monomer in Resin Composition>

The resin composition of the present embodiment may contain a part of monomers used for copolymerization of the copolymer P as an unreacted monomer.

The total content of unreacted monomer in the resin composition of the present embodiment is 2000 mass ppm or less, preferably 1800 mass ppm or less, and more preferably 1600 mass ppm or less. Specifically, for example, it is preferably 2000, 1800, 1600, 1400, 1200, 1000, 800, 600, or 500 mass ppm, and may be in the range between any two of the values exemplified herein. If the total content of the unreacted monomer is more than 2000 ppm by mass, the productivity may decrease due to significant contamination of the mold when molding with a resin composition, or the safety may be impaired due to the unreacted monomer leaching into the container contents when the molded products are used for containers, etc.

The content of the unreacted monomer in the resin composition can be determined, for example, by an internal standard method using gas chromatography.

Note that when the styrene-based monomer, and/or (meth)acrylic ester-based monomer, and/or other copolymerizable monomer units are used in combination, the content of the unreacted monomer means a total amount of these monomers used in combination.

The content of unreacted monomer in the resin composition can be controlled, for example, by adjusting the type and amount of the chain transfer agent used in the polymerization of the copolymer P. It can also be controlled by adjusting the devolatilization conditions after obtaining the copolymer P and the ratio of the monomers used in the polymerization of the copolymer P.

<Sulfur Content in Resin Composition>

The resin composition of the present embodiment may contain sulfur due to the sulfur-based chain transfer agent used in the copolymerization of the copolymer P.

The sulfur content in the resin composition of the present embodiment is more than 0 mass ppm and 150 mass ppm or less. Preferably, it is 30 mass ppm or more, and more preferably 40 mass ppm or more. Specifically, for example, it is preferably 0.1, 1, 5, 10, 20, 30, 40, 50, 60, 70, 80, 90, 100, or 150 mass ppm, and may be in the range between any two of the values exemplified herein.

When the sulfur content is 150 mass ppm or less, the odor is sufficiently reduced. Although it is ideally desirable not to use a sulfur-containing chain transfer agent, it is practically difficult not to use them because the chain transfer efficiency is poor and the chain transfer agent remains when using a chain transfer agent such as $\alpha$-methylstyrene dimer, which adversely affects the physical properties and other properties of the resin.

The sulfur content in the resin composition can be measured, for example, by the quantitative determination of sulfur by the fluorescence method of X-ray analysis, using a flat plate of the resin composition.

The sulfur content in the resin composition can be controlled, for example, by adjusting the type and amount of the chain transfer agent used in the polymerization of the copolymer P.

<Yellowness Index YI>

The yellowness index (YI) of the 2 mm thick injection molded plates obtained from the resin composition of the present embodiment is 0.6 or less, preferably 0.55 or less, and more preferably 0.50 or less. Specifically, for example, it is preferably 0.1, 0.2, 0.3, 0.4, 0.5, or 0.6, and may be in the range between any two of the values exemplified herein.

When the yellowness index (YI) is 0.6 or less, there are advantages of excellent hue and good colorability of molded products.

The yellowness index (YI) of the 2 mm thick injection molded plate obtained from the resin composition can be measured, for example, with a color difference meter ($\Sigma$-80 manufactured by NIPPON DENSHOKU INDUSTRIES CO., LTD.).

The yellowness index (YI) of the 2 mm thick injection molded plate obtained from the resin composition can be controlled, for example, by adjusting the type and amount of the chain transfer agent used in the polymerization of the copolymer P. It can also be controlled by adjusting the type and usage ratio of the monomers used in the polymerization of the copolymer P, and the devolatilization conditions of the obtained copolymer P.

<Change Amount of Yellowness Index ΔYI>

When the yellowness index (YI) of the 2 mm thick injection molded plate obtained from the resin composition of the present invention is taken as A and the yellowness index (YI) of the plate after 360 hours of UV irradiation at an irradiation intensity of 60 W/m is taken as B, the following relationship is satisfied.

$$B\text{-}A < 0.8$$

Preferably, the value of B-A is less than 0.75, and more preferably less than 0.70. When the value of B-A is less than 0.8, it is possible to keep excellent optical properties with good resistance to UV light and less yellowing, especially during outdoor use and storage.

The value of B-A can be controlled, for example, by adjusting the type and amount of the chain transfer agent used in the polymerization of the copolymer P. Further, it can also be controlled by the type and usage ratio of the monomers used in the polymerization of the copolymer P, as well as by adapting stabilizers.

<Relationship Between Total Content of Unreacted Monomer and Sulfur Content>

For the resin composition of the present embodiment, 100000 times the reciprocal of the product of the total content of the unreacted monomer and the sulfur content (100000 / (total content of the unreacted monomer × the sulfur content)) is preferably 0.5 to 8.0, more preferably 0.8 to 7.5, and even more preferably 1.0 to 2.5. Specifically, for example, it is preferably 0.5, 0.6, 0.7, 0.8, 0.9, 1.0, 1.1, 1.3, 1.4, 1.5, 2.0, 3.0, 4.0, 5.0, 6.0, 7.0, or 8.0, and may be in the range between any two of the values exemplified herein.

If the value of (100000 / (total content of the unreacted monomer × the sulfur content)) is within this range, the balance between odor reduction and safety for cosmetic and food packaging applications is excellent.

The value of (100000 / (total content of the unreacted monomer × the sulfur content)) can be controlled, for example, by adjusting the type and amount of the chain transfer agent used in the polymerization of the copolymer P. Further, it can also be controlled by adjusting the type and usage ratio of the monomers used in the polymerization of the copolymer P and the devolatilization conditions of the obtained copolymer P.

<Ratio of Total Content of Unreacted Monomer to Sulfur Content>

For the resin composition of the present embodiment, the ratio of the total content of the unreacted monomer to the sulfur content (total content of the unreacted monomer / the sulfur content) is preferably 8 to 50, more preferably 10 to 40, and even more preferably 20 to 30. Specifically, for example, it is preferably 8, 10, 15, 20, 25, 30, 35, 40, or 50, and may be in the range between any two of the values exemplified herein.

If the value of the ratio of the total content of the unreacted monomer to the sulfur content is within this range, the balance between odor reduction and safety in cosmetic and food packaging applications is excellent.

The value of the ratio of the total content of the unreacted monomer to the sulfur content can be controlled, for example, by adjusting the type and amount of the chain transfer agent used in the polymerization of the copolymer P. Further, it can also be controlled by adjusting the devolatilization conditions of the obtained copolymer P.

<Melt Mass Flow Rate (MFR) Value>

For the resin composition of the present embodiment, a MFR value under the condition of a test temperature of 200°C and a nominal load of 5 kg is preferably 1 to 5 g/10 min, more preferably 1.5 to 4 g/10 min, and even more preferably 1.8 to 3 g/10 min. Specifically, for example, the MFR value is preferably 1, 2, 3, 4, or 5 g/10 min, and may be in the range between any two of the values exemplified herein.

For the resin composition of the present embodiment, the MFR value under the condition of a test temperature of 240°C and a nominal load of 10 kg is preferably 70 to 110 g/10 min, more preferably 75 to 100 g/10 min, and more preferably 80 to 95 g/10 min. Specifically, for example, the MFR value is preferably 70, 75, 80, 85, 90, 95, 100, or 110 g/10 min, and may be in the range between any two of the values exemplified herein. If the MFR value is within this range, flowability is good and moldability is excellent.

The MFR value is measured at 200°C, 5 kg or 240°C, 10 kg, in accordance with JIS K-7210. The MFR value can be controlled, for example, by adjusting the type and amount of the chain transfer agent used in the polymerization of the copolymer P and adjusting the molecular weight of the copolymer P. It can also be controlled by adjusting the type and usage ratio of the monomer used in the polymerization of the copolymer P.

<Method for Producing Copolymer Containing Styrene-based Monomer Unit and (Meth)acrylic Acid Ester-based Monomer Unit>

The copolymer P of the present embodiment is obtained by polymerizing the styrene-based monomer and the (meth)acrylic ester-based monomer, and is preferably produced by radical polymerization. Specific examples of the polymerization include suspension polymerization, bulk polymerization, and solution polymerization, and suspension polymerization is preferred. Since suspension polymerization can easily remove heat generated by polymerization and thus can be performed up to the high conversion region, the unreacted monomer can be efficiently suppressed.

<Polymerization Solvent>

Examples of polymerization solvents include alkyl benzenes such as benzene, toluene, ethyl benzene, and xylene, ketones such as acetone and methyl ethyl ketone, and aliphatic hydrocarbons such as hexane and cyclohexane.

<Polymerization Initiator>

As the polymerization initiator, radical polymerization initiators are preferable. Examples of the known and commonly used polymerization initiator include peroxyketals such as 1,1-di(t-butylperoxy)cyclohexane, 2,2-di(t-butylperoxy)butane, 2,2-di(4,4-di-t-butylperoxycyclohexyl)propane, and 1,1-di(t-amylperoxy)cyclohexane, hydroperoxides such as cumene hydroperoxide, and t-butyl hydroperoxide, alkyl peroxides such as t-butyl peroxyacetate, and t-amyl peroxyisononanoat, dialkyl peroxides such as t-butylcumyl peroxide, di-t-butyl peroxide, dicumyl peroxide, and di-t-hexyl peroxide, peroxyesters such as t-butyl peroxyacetate, t-butyl peroxybenzoate, and t-butyl peroxyisopropyl monocarbonate, and peroxycarbonates such as t-butylperoxyisopropyl carbonate, polyether tetrakis(t-butylperoxycarbonate), N,N'-azobis(cyclohexane-1-carbonitrile), N,N'-azobis(2-methylbutyronitrile), N,N'-azobis(2,4-dimethylvaleronitrile), and N,N'-azobis[2-(hydroxymethyl)propionitrile]. One or two or more types of these can be used in combination.

<Chain Transfer Agent>

During the copolymerization of the copolymer P of the present embodiment, the chain transfer agent may be added during the polymerization for the purpose of adjusting the molecular weight. Examples of such a chain transfer agent include the sulfur-based chain transfer agent, $\alpha$-methylstyrene dimer, and terpinolene. One of these chain transfer agents may be used alone, or two or more types of these may be used in combination.

<Sulfur-based Chain Transfer Agent>

Examples of the sulfur-based chain transfer agent include a linear alkyl mercaptan-based chain transfer agent, a branched alkyl mercaptan-based chain transfer agent, aromatic mercaptan, and ethylene thioglycol. Examples of the linear alkyl mercaptan-based chain transfer agent include n-dodecyl mercaptan, n-octyl mercaptan, n-decyl mercaptan, n-hexyl mercaptan, and n-butyl mercaptan. Examples of the branched alkyl mercaptan-based chain transfer agent include t-dodecyl mercaptan, sec-dodecyl mercaptan, and isobutyl mercaptan. N-dodecyl mercaptan is preferable in terms of the chain transfer effect and an amount of sulfur component generated in the copolymer P. One of these sulfur-based chain transfer agents may be used alone, or two or more types of these may be used in combination. The sulfur-based chain transfer agent may cause the generation of sulfur components derived from the sulfur-based chain transfer agent in the resin composition.

<$\alpha$-Methylstyrene Dimer>

$\alpha$-methylstyrene dimer does not cause the generation of the sulfur components derived from the sulfur-based chain transfer agent in the resin composition.

In the method for producing the copolymer P of the present embodiment, in the step of polymerizing the styrene-based monomer and the (meth)acrylic ester-based monomer, the linear alkyl mercaptan-based chain transfer agent and the $\alpha$-methylstyrene dimer chain transfer agent are preferably used in combination. The combination of the chain transfer agent can achieve a balance between odor reduction and safety in cosmetic and food packaging applications.

In the method for producing the copolymer P, in the step of polymerizing the styrene monomer and the (meth) acrylic ester monomer, the ratio of an amount of the linear alkyl mercaptan chain transfer agent added to an amount of the $\alpha$-methylstyrene dimer chain transfer agent added is preferably 0.08 to 0.25, more preferably 0.08 to 0.20, and even more preferably 0.10 to 0.20. Specifically, for example, it is preferably 0.08, 0.10, 0.12, 0.14, 0.16, 0.18, 0.20, 0.22, or 0.25, and may be in the range between any two of the values exemplified herein. If the ratio of the amount of the linear alkyl mercaptan-based chain transfer agent to the amount of the α-methylstyrene dimer chain transfer agent is within this range, the balance between odor reduction and safety in cosmetic and food packaging applications is further excellent. Note that when the linear alkyl mercaptan-based chain transfer agents are used in combination, the amount of the linear alkyl mercaptan-based chain transfer agent added means the total amount of these linear alkyl mercaptan-based chain transfer agents used in combination.

\<Resin Composition Containing Copolymer Containing Styrene-based Monomer Unit and (Meth)acrylic Ester-based Monomer Unit>

The resin composition of the present embodiment may be added with known additives such as antioxidants, lubricants, mold release agents, plasticizers, pigments, dyes, foaming agents, foaming nucleating agents, inorganic fillers, antistatic agents, sliding agents, etc., if necessary. It can also be used in combination with known resins such as GP-PS (general-purpose polystyrene), HI-PS (impact-resistant polystyrene), MBS (methyl methacrylate-butadiene-styrene copolymer) resin, AS (acrylonitrile-styrene copolymer) resin, ABS (acrylonitrile-butadiene-styrene copolymer) resin, PE (polyethylene), PP (polypropylene), and PPO (polyphenylene oxide).

The resin composition of the present embodiment can be formed into the injection molded body by known methods. The obtained injection molded body can be used as a home appliance housing or a container for food, stationery, cosmetics and other applications.

**Examples**

Hereinafter, Examples and Comparative Examples are presented to explain the specific embodiments of the present invention in more detail. The present invention is not limited by the following Examples. Note that "%" is based on mass. First, the evaluation method in the present invention is described below.

(1) Measurement of monomer unit: Samples were prepared by dissolving the resin compositions in heavy chloroform, and the monomer unit composition in the copolymer P was calculated from the area ratio of the spectrum peaks attributed to each monomer unit using 13C-NMR.

(2) Measurement of unreacted monomer: The amount of the residual monomer was measured by weighing 0.2 g of the resin composition, dissolving it in 10 ml of tetrahydrofuran containing p-diethylbenzene as an internal standard material, and measuring it using capillary gas chromatograph under the following conditions.

Capillary gas chromatograph: GC-4000 (manufactured by GL Sciences Inc.)
Column: InertCap WAX manufactured by GL Sciences Inc., inside diameter 0.25mm, length 30m, thickness 50 μm
Injection temperature: 180°C
Column temperature: 60°C to 170°C
Detector temperature: 210°C
Split ratio: 5/1

(3) Measurement of sulfur content: Sulfur was quantitatively determined by the fluorescence method of X-ray analysis using the 2 mm thick injection molded plate obtained from the resin composition under the molding conditions of a cylinder temperature of 230°C and a mold temperature of 60°C.

(4) Measurement of yellowness index (YI) of 2 mm thick injection molded plate: The YI (yellowness index) of the 2 mm thick part of the plate, which was injection-molded at the molding condition of the cylinder temperature of 230°C and the mold temperature of 60°C, was measured by the transmission method in a constant temperature and humidity chamber at 23°C and 50% humidity using a Σ-80 colorimeter manufactured by NIPPON DENSHOKU INDUSTRIES CO., LTD., in accordance with JIS K7105 (unit: -).

(5) Calculation of change in yellowness index (ΔYI) before and after irradiation: Using the 2 mm thick injection molded plate obtained under the molding conditions of the cylinder temperature 230°C and the mold temperature 60°C from a resin composition, a weather resistance test was conducted for 500 hours in accordance with JASO M351 using an accelerated weather resistance tester (Atlas Xeon Weather Meter Ci4000 manufactured by Toyo Seiki Seisaku-sho, Ltd., filter used: Type S borosilicate for both IN and OUT). The ΔYI before and after irradiation was calculated in accordance with the above YI measurement method.

(6) MFR value: The MFR of the obtained resin composition was measured at 200°C, 5 kg or 240°C, 10 kg in accordance with JIS K-7210.

(7) Safety for food and cosmetic packaging applications and productivity: The 2 mm thick plate obtained by injection molding under the molding conditions of the cylinder temperature of 230°C and the mold temperature of 60°C was immersed in 8% ethanol solution and heated at about 50°C for about 24 hours, or immersed in n-heptane and heated at about 50°C for about 30 minutes. The solution after removing the plate was then evaporated and solidified, and the weight of the residue was measured. The safety for food and cosmetic packaging applications was evaluated in accordance with the following criteria using the amount of elution (mg/cm$^2$) per unit area of the above plate. Note that the higher the amount of elution is, the more the mold is contaminated during molding, and therefore the amount of elution also becomes an indicator of productivity.

A (Excellent): Less than 0.01 mg/cm$^2$
B (Good): Within the range of 0.01 to 0.3 mg/cm$^2$
C (Poor): More than 0.3 mg/cm$^2$

(8) Resistance to yellowing due to UV light: For the 2 mm thick plate obtained by injection molding under the molding conditions of the cylinder temperature of 230°C and the mold temperature of 60°C, the resistance to yellowing due to UV light was evaluated in accordance with the following criteria, using the value of the yellowing index ($\Delta$YI) before and after irradiation as an indicator,

A (Excellent): $\Delta$YI < 0.7
B (Good): $0.7 \leq \Delta YI \leq 1.2$
C (Poor): $\Delta$YI > 1.2.

(9) Moldability: Using an injection molding machine (IS-50EPN manufactured by Toshiba Machine Co., Ltd), three-stage plates, each stage of which was 40mm × 40mm and had thicknesses of 1mm, 2mm and 3mm were injection molded under the molding conditions of the cylinder temperature of 230°C and a mold temperature of 40°C, and the moldability was evaluated in accordance with the following criteria.

A (Excellent): Easily injection-moldable with no particular problems.
B (Good): Some appearance defects such as flash can be seen in the molded products, but moldable.
C (Poor): Some appearance defects such as flash, burn, flow marks are noticeable but moldable, or molded products cannot be obtained because the mold cannot be completely filled.

(10) Odor: Five test pieces (10 mm × 10 mm, 4 mm thick) obtained by injection molding under molding conditions of the cylinder temperature of 230°C and the mold temperature of 60°C were placed in a glass container, sealed with aluminum foil, and left for 10 hours. Then, the aluminum foil was peeled off, the odor was sniffed, and evaluated by a sensory test based on the following criteria.

A (Excellent): Almost none
B (Good): Slightly present
C (Poor): Unpleasant odor present

<Example 1>

The styrene-based resin was produced by continuous solution polymerization using a radical polymerization method. A complete mixing tank type stirring tank was used as the first reactor, and a plug flow type reactor with a static mixer was used as the second reactor, which were connected in series to constitute a polymerization step. The volume of the first reactor was 30 L, and the volume of the second reactor was 12 L. A raw material solution was prepared with a composition of 35 parts by mass of styrene, 53 parts by mass of methyl methacrylate, and 12 parts by mass of ethylbenzene, and was continuously supplied in the polymerization step at a flow rate of 8.0 kg/hr. In addition, 0.015 parts by mass of t-butyl peroxyisopropyl monocarbonate as a polymerization initiator, 0.038 parts by mass of n-dodecyl mercaptan as a chain transfer agent, and 0.42 parts by mass of $\alpha$-methylstyrene dimer were added continuously to the supply line of the raw material solution. The temperature of the first reactor was adjusted to 135°C, and in the second reactor, a temperature gradient was set along the flow direction, with the temperature set to 130°C in the middle part and 145°C in the outlet part. The polymer concentration at the exit of the polymerization step was 65%, and the conversion rate of styrene and methyl methacrylate was 72%. The polymer solution taken out continuously from the reactor was supplied to a vacuum devolatilizer with a preheater, and unreacted styrene, methyl methacrylate, ethylbenzene, and other substances were separated. The temperature of the preheater was adjusted so that the polymer temperature in the vacuum distillation tank was 240°C, and the pressure in the vacuum distillation tank was 1 kPa. The polymer was extracted from the vacuum distillation tank using a gear pump, extruded into strands, cooled with cooling water, and then cut to obtain a copolymer in pellet form. The formulation of the resin composition and the results of analysis and evaluation are shown in Table 1 (Table 1-1 to Table 1-2).

<Example 2>

Example 2 was the same as Example 1, except that 0.038 parts by mass of n-dodecyl mercaptan, and 0.42 parts by mass of $\alpha$-methylstyrene dimer in Example 1 were replaced by 0.04 parts by mass of n-dodecyl mercaptan, and 0.40 parts by mass of $\alpha$-methylstyrene dimer, respectively. The formulation of the resin composition and the results of analysis and evaluation are shown in Table 1 (Table 1-1 to Table 1-2).

<Example 3>

Example 3 was the same as Example 1, except that 0.038 parts by mass of n-dodecyl mercaptan, and 0.42 parts by mass of $\alpha$-methylstyrene dimer in Example 1 were replaced by 0.04 parts by mass of n-dodecyl mercaptan, and 0.35 parts by mass of $\alpha$-methylstyrene dimer, respectively. The formulation of the resin composition and the results of analysis and evaluation are shown in Table 1 (Table 1-1 to Table 1-2).

<Example 4>

Example 4 was the same as Example 1, except that 0.038 parts by mass of n-dodecyl mercaptan, and 0.42 parts by mass of $\alpha$-methylstyrene dimer in Example 1 were replaced by 0.04 parts by mass of n-dodecyl mercaptan, and 0.30 parts by mass of $\alpha$-methylstyrene dimer, respectively. The formulation of the resin composition and the results of analysis and evaluation are shown in Table 1 (Table 1-1 to Table 1-2).

<Example 5>

Example 5 was the same as Example 1, except that 0.038 parts by mass of n-dodecyl mercaptan, and 0.42 parts by mass of $\alpha$-methylstyrene dimer in Example 1 were replaced by 0.05 parts by mass of n-dodecyl mercaptan, and 0.25 parts by mass of $\alpha$-methylstyrene dimer, respectively. The formulation of the resin composition and the results of analysis and evaluation are shown in Table 1 (Table 1-1 to Table 1-2).

<Example 6> (not falling under the scope of the present invention)

Example 6 was the same as Example 2, except that 40 parts by mass of styrene, and 60 parts by mass of methyl methacrylate in Example 2 were replaced by 54 parts by mass of styrene, and 46 parts by mass of methyl methacrylate, respectively. The formulation of the resin composition and the results of analysis and evaluation are shown in Table 1 (Table 1-1 to Table 1-2).

<Example 7>

Example 7 was the same as Example 1, except that 0.038 parts by mass of n-dodecyl mercaptan, and 0.42 parts by mass of $\alpha$-methylstyrene dimer in Example 1 were replaced by 0.07 parts by mass of n-dodecyl mercaptan, and 0.40 parts by mass of $\alpha$-methylstyrene dimer, respectively. The formulation of the resin composition and the results of analysis and evaluation are shown in Table 1 (Table 1-1 to Table 1-2).

<Example 8> (not falling under the scope of the present invention)

Example 8 was the same as Example 1, except that 0.038 parts by mass of n-dodecyl mercaptan, and 0.42 parts by mass of $\alpha$-methylstyrene dimer in Example 1 were replaced by 0.10 parts by mass of n-dodecyl mercaptan, and 0.50 parts by mass of $\alpha$-methylstyrene dimer, respectively. The formulation of the resin composition and the results of analysis and evaluation are shown in Table 1 (Table 1-1 to Table 1-2).

<Example 9>

Example 9 was the same as Example 1, except that 0.038 parts by mass of n-dodecyl mercaptan, and 0.42 parts by mass of $\alpha$-methylstyrene dimer in Example 1 were replaced by 0.01 parts by mass of n-dodecyl mercaptan, and 0.25 parts by mass of $\alpha$-methylstyrene dimer, respectively. The formulation of the resin composition and the results of analysis and evaluation are shown in Table 1 (Table 1-1 to Table 1-2).

<Example 10>

Example 10 was the same as Example 1, except that 0.038 parts by mass of n-dodecyl mercaptan, and 0.42 parts by mass of $\alpha$-methylstyrene dimer in Example 1 were replaced by 0.11 parts by mass of n-dodecyl mercaptan, and 0.05 parts by mass of $\alpha$-methylstyrene dimer, respectively. The formulation of the resin composition and the results of analysis and evaluation are shown in Table 1 (Table 1-1 to Table 1-2).

<Example 11>

Example 11 was the same as Example 1, except that 0.038 parts by mass of n-dodecyl mercaptan, and 0.42 parts by mass of $\alpha$-methylstyrene dimer in Example 1 were replaced by 0.11 parts by mass of n-dodecyl mercaptan, and $\alpha$-methylstyrene dimer was not used. The formulation of the resin composition and the results of analysis and evaluation are shown in Table 1 (Table 1-1 to Table 1-2).

<Example 12>

Example 12 was the same as Example 1, except that 0.038 parts by mass of n-dodecyl mercaptan, and 0.42 parts by mass of $\alpha$-methylstyrene dimer in Example 1 were replaced by 0.02 parts by mass of n-dodecyl mercaptan, and 0.30 parts by mass of $\alpha$-methylstyrene dimer, respectively. The formulation of the resin composition and the results of analysis and evaluation are shown in Table 1 (Table 1-1 to Table 1-2).

<Example 13>

Example 13 was the same as Example 1, except that 0.038 parts by mass of n-dodecyl mercaptan, and 0.42 parts by mass of $\alpha$-methylstyrene dimer in Example 1 were replaced by 0.02 parts by mass of n-dodecyl mercaptan, and 0.40 parts by mass of $\alpha$-methylstyrene dimer, respectively. The formulation of the resin composition and the results of analysis and evaluation are shown in Table 1 (Table 1-1 to Table 1-2).

<Example 14>

Example 14 was the same as Example 1, except that 0.038 parts by mass of n-dodecyl mercaptan, and 0.42 parts by mass of $\alpha$-methylstyrene dimer in Example 1 were replaced by 0.01 parts by mass of n-dodecyl mercaptan, and 0.20 parts by mass of $\alpha$-methylstyrene dimer, respectively. The formulation of the resin composition and the results of analysis and evaluation are shown in Table 1 (Table 1-1 to Table 1-2).

<Comparative Example 1>

Comparative Example 1 was the same as Example 1, except that 0.038 parts by mass of n-dodecyl mercaptan, and 0.42 parts by mass of $\alpha$-methylstyrene dimer in Example 1 were replaced by 0.20 parts by mass of n-dodecyl mercaptan, and $\alpha$-methylstyrene dimer was not used. The formulation of the resin composition and the results of analysis and evaluation are shown in Table 2.

<Comparative Example 2>

Comparative Example 2 was the same as Example 1, except that 0.038 parts by mass of n-dodecyl mercaptan, and 0.42 parts by mass of $\alpha$-methylstyrene dimer in Example 1 were replaced by 0.30 parts by mass of n-dodecyl mercaptan, and $\alpha$-methylstyrene dimer was not used. The formulation of the resin composition and the results of analysis and evaluation are shown in Table 2.

<Comparative Example 3>

Comparative Example 3 was the same as Example 1, except that 0.038 parts by mass of n-dodecyl mercaptan, and 0.42 parts by mass of $\alpha$-methylstyrene dimer in Example 1 were replaced by 0.54 parts by mass of $\alpha$-methylstyrene dimer, and n-dodecyl mercaptan was not used. The formulation of the resin composition and the results of analysis and evaluation are shown in Table 2.

<Comparative Example 4>

Comparative Example 4 was the same as Example 1, except that 0.038 parts by mass of n-dodecyl mercaptan, and 0.42 parts by mass of $\alpha$-methylstyrene dimer in Example 1 were replaced by 0.60 parts by mass of n-dodecyl mercaptan, and $\alpha$-methylstyrene dimer was not used. The formulation of the resin composition and the results of analysis and evaluation are shown in Table 2.

<Comparative Example 5>

Comparative Example 5 was the same as Example 1, except that 0.038 parts by mass of n-dodecyl mercaptan, and 0.42 parts by mass of $\alpha$-methylstyrene dimer in Example 1 were replaced by 0.15 parts by mass of n-dodecyl mercaptan, and 0.15 parts by mass of $\alpha$-methylstyrene dimer, respectively. The formulation of the resin composition and the results of analysis and evaluation are shown in Table 2.

<Comparative Example 6>

Comparative Example 6 was the same as Example 6, except that 0.04 parts by mass of n-dodecyl mercaptan, and 0.40 parts by mass of $\alpha$-methylstyrene dimer in Example 6 were replaced by 0.25 parts by mass of n-dodecyl mercaptan, and $\alpha$-methylstyrene dimer was not used. The formulation of the resin composition and the results of analysis and evaluation are shown in Table 2.

<Comparative Example 7>

Comparative Example 7 was the same as Example 12, except that 40 parts by mass of styrene, and 60 parts by mass of methyl methacrylate in Example 12 were replaced by 79 parts by mass of styrene, and 21 parts by mass of methyl methacrylate, respectively. The formulation of the resin composition and the results of analysis and evaluation are shown in Table 2.
[Table 1-1]

| Table 1-1 | | | Examples | | | | | | |
|---|---|---|---|---|---|---|---|---|---|
| | | | 1 | 2 | 3 | 4 | 5 | 6 | 7 |
| Resin Composition Formulation | Styrene | parts by mass | 40 | 40 | 40 | 40 | 40 | 54 | 40 |
| | Methyl Methacrylate | parts by mass | 60 | 60 | 60 | 60 | 60 | 46 | 60 |
| | n-Dodecyl Mercaptan | parts by mass | 0.038 | 0.04 | 0.04 | 0.04 | 0.05 | 0.04 | 0.07 |
| | $\alpha$-Methylstyrene Dimer | parts by mass | 0.42 | 0.40 | 0.35 | 0.30 | 0.25 | 0.40 | 0.40 |
| | t-Dodecyl Mercaptan | parts by mass | | | | | | | |
| | n-Dodecyl Mercaptan / $\alpha$-Methylstyrene Dimer | - | 0.09 | 0.10 | 0.11 | 0.13 | 0.20 | 0.10 | 0.18 |
| Composition of Copolymer P | Styrene-based Monomer Unit | mass% | 40 | 40 | 40 | 40 | 40 | 53 | 40 |
| | (Meth)acrylic Acid Ester-based Monomer Unit | mass% | 60 | 60 | 60 | 60 | 60 | 47 | 60 |

(continued)

| Table 1-1 | | | Examples | | | | | | |
|---|---|---|---|---|---|---|---|---|---|
| | | | 1 | 2 | 3 | 4 | 5 | 6 | 7 |
| Analysis and Evaluation | Unreacted Styrene Monomer | mass ppm | 590 | 510 | 590 | 550 | 500 | 630 | 730 |
| | Unreacted Methyl Methacrylate Monomer | mass ppm | 1170 | 1040 | 980 | 970 | 890 | 950 | 960 |
| | Total Unreacted Monomer | mass ppm | 1760 | 1550 | 1570 | 1520 | 1390 | 1580 | 1690 |
| | YI before Irradiation (A) | - | 0.47 | 0.46 | 0.46 | 0.48 | 0.47 | 0.35 | 0.46 |
| | YI after Irradiation (B) | - | 1.18 | 1.16 | 1.14 | 1.15 | 1.19 | 1.50 | 1.21 |
| | ΔYI before and after Irradiation (B-A) | - | 0.71 | 0.70 | 0.68 | 0.67 | 0.72 | 1.15 | 0.75 |
| | Sulfur Content | mass ppm | 55 | 60 | 55 | 55 | 75 | 60 | 95 |
| | 100000 / (Total Unreacted Monomer × Sulfur Content) | - | 1.0 | 1.1 | 1.2 | 1.2 | 1.0 | 1.1 | 0.6 |
| | Total Unreacted Monomer / Sulfur Content | - | 32.0 | 25.8 | 28.5 | 27.6 | 18.5 | 26.3 | 17.8 |
| | MFR (@200°C×5 kg) | g/10min | 2.1 | 2.0 | 2.0 | 1.9 | 1.8 | 1.8 | 2.3 |
| | MFR (@240°C×10 kg) (Injection moldability at high temperature) | g/10min | 88.1 | 88.3 | 86.8 | 85.1 | 84.3 | 82.2 | 90.1 |
| | Safety for Food and Cosmetics Packaging Applications and Productivity | | B | A | A | A | A | A | A |
| | Resistance to Yellowing due to UV Light | | B | A | A | A | B | B | B |
| | Moldability | | A | A | A | A | A | A | A |
| | Odor | | A | A | A | A | A | A | A |

[Table 1-2]

| Table 1-2 | | | Examples | | | | | | |
|---|---|---|---|---|---|---|---|---|---|
| | | | 8 | 9 | 10 | 11 | 12 | 13 | 14 |
| Resin Composition Formulation | Styrene | parts by mass | 40 | 40 | 40 | 40 | 40 | 40 | 40 |
| | Methyl Methacrylate | parts by mass | 60 | 60 | 60 | 60 | 60 | 60 | 60 |
| | n-Dodecyl Mercaptan | parts by mass | 0.10 | 0.01 | 0.11 | 0.11 | 0.02 | 0.02 | 0.01 |
| | $\alpha$-Methylstyrene Dimer | parts by mass | 0.50 | 0.25 | 0.05 | | 0.30 | 0.40 | 0.20 |
| | t-Dodecyl Mercaptan | parts by mass | | | | | | | |
| | n-Dodecyl Mercaptan / $\alpha$-Methylstyrene Dimer | - | 0.20 | 0.04 | 2.20 | - | 0.07 | 0.05 | 0.05 |
| Composition of Copolymer P | Styrene-based Monomer Unit | mass% | 40 | 40 | 40 | 40 | 40 | 40 | 40 |
| | (Meth)acrylic Acid Ester-based Monomer Unit | mass% | 60 | 60 | 60 | 60 | 60 | 60 | 60 |

(continued)

| Table 1-2 | | | Examples | | | | | | |
|---|---|---|---|---|---|---|---|---|---|
| | | | 8 | 9 | 10 | 11 | 12 | 13 | 14 |
| Analysis and Evaluation | Unreacted Styrene Monomer | mass ppm | 810 | 490 | 470 | 440 | 530 | 600 | 490 |
| | Unreacted Methyl Methacrylate Monomer | mass ppm | 1170 | 870 | 820 | 710 | 960 | 1140 | 880 |
| | Total Unreacted Monomer | mass ppm | 1980 | 1360 | 1290 | 1150 | 1490 | 1740 | 1370 |
| | YI before Irradiation (A) | - | 0.46 | 0.47 | 0.48 | 0.46 | 0.47 | 0.46 | 0.46 |
| | YI after Irradiation (B) | - | 1.31 | 1.12 | 1.17 | 1.14 | 1.14 | 1.15 | 1.10 |
| | ΔYI before and after Irradiation (B-A) | - | 0.85 | 0.65 | 0.69 | 0.68 | 0.67 | 0.69 | 0.64 |
| | Sulfur Content | mass ppm | 135 | 10 | 145 | 145 | 30 | 30 | 10 |
| | 100000 / (Total Unreacted Monomer × Sulfur Content) | - | 0.4 | 7.4 | 0.5 | 0.6 | 2.2 | 1.9 | 7.3 |
| | Total Unreacted Monomer / Sulfur Content | - | 14.7 | 136.0 | 8.9 | 7.9 | 49.7 | 58.0 | 137.0 |
| | MFR ((@200°C×5 kg) | g/10min | 2.7 | 1.2 | 1.6 | 1.4 | 1.6 | 1.9 | 0.9 |
| | MFR (@240°C×10 kg) (Injection moldability at high temperature) | g/10min | 96.0 | 70.3 | 79.5 | 76.6 | 80.0 | 85.7 | 68.4 |
| | Safety for Food and Cosmetics Packaging Applications and Productivity | | B | A | A | A | A | B | A |
| | Resistance to Yellowing due to UV Light | | B | A | A | A | A | A | A |
| | Moldability | | A | B | B | B | B | A | B |
| | Odor | | B | A | B | B | A | A | A |

[Table 2]

| Table 2 | | | Comparative Examples | | | | | | |
|---|---|---|---|---|---|---|---|---|---|
| | | | 1 | 2 | 3 | 4 | 5 | 6 | 7 |
| Resin Composition Formulation | Styrene | parts by mass | 40 | 40 | 40 | 40 | 40 | 54 | 79 |
| | Methyl Methacrylate | parts by mass | 60 | 60 | 60 | 60 | 60 | 46 | 21 |
| | n-Dodecyl Mercaptan | parts by mass | 0.20 | 0.30 | | | | | 0.02 |
| | α-Methylstyrene Dimer | parts by mass | | | 0.54 | | 0.15 | | 0.30 |
| | t-Dodecyl Mercaptan | parts by mass | | | | 0.60 | 0.15 | 0.25 | |
| | n-Dodecyl Mercaptan / α-Methylstyrene Dimer | - | - | - | 0.00 | - | 0.00 | - | 0.07 |
| Composition of Copolymer P | Styrene-based Monomer Unit | mass% | 40 | 40 | 40 | 40 | 40 | 53 | 79 |
| | (Meth)acrylic Acid Ester-based Monomer Unit | mass% | 60 | 60 | 60 | 60 | 60 | 47 | 21 |

(continued)

| Table 2 | | | Comparative Examples | | | | | | |
|---|---|---|---|---|---|---|---|---|---|
| | | | 1 | 2 | 3 | 4 | 5 | 6 | 7 |
| Analysis and Evaluation | Unreacted Styrene Monomer | mass ppm | 480 | 460 | 790 | 470 | 500 | 460 | 970 |
| | Unreacted Methyl Methacrylate Monomer | mass ppm | 820 | 810 | 1360 | 810 | 910 | 820 | 410 |
| | Total Unreacted Monomer | mass ppm | 1300 | 1270 | 2150 | 1280 | 1410 | 1280 | 1380 |
| | YI before Irradiation (A) | - | 0.46 | 0.45 | 0.48 | 0.50 | 0.48 | 0.33 | 0.78 |
| | YI after Irradiation (B) | - | 1.26 | 1.27 | 1.32 | 1.37 | 1.31 | 1.75 | 2.85 |
| | ΔYI before and after Irradiation (B-A) | - | 0.80 | 0.82 | 0.84 | 0.87 | 0.83 | 1.42 | 2.07 |
| | Sulfur Content | mass ppm | 280 | 450 | below detection limit | 880 | 220 | 360 | 30 |
| | 100000 / (Total Unreacted Monomer × Sulfur Content) | - | 0.3 | 0.2 | NA | 0.1 | 0.3 | 0.2 | 2.4 |
| | Total Unreacted Monomer / Sulfur Content | - | 4.6 | 2.8 | NA | 1.5 | 6.4 | 3.6 | 46.0 |
| | MFR (@200°C×5 kg) | g/10min | 2.3 | 2.8 | 2.1 | 2.8 | 1.5 | 1.5 | 1.4 |
| | MFR (@240°C×10 kg) (Injection moldability at high temperature) | g/10min | 89.9 | 95.6 | 88.6 | 94.4 | 78.3 | 79.1 | 75.5 |
| | Safety for Food and Cosmetics Packaging Applications and Productivity | | A | A | C | A | A | A | A |
| | Resistance to Yellowing due to UV Light | | B | B | B | B | B | C | C |
| | Moldability | | A | A | A | A | B | B | B |
| | Odor | | C | C | A | C | C | C | A |
| **\*NA means not calculable due to sulfur content below the detection limit** | | | | | | | | | |

The results in Table 1 (Table 1-1 to Table 1-2) and Table 2 show that the resin compositions of Examples have excellent safety for cosmetics and food packaging applications, productivity, injection moldability, as well as excellent hue and light resistance, and a low odor. Further, the yellowness index before UV irradiation and a change amount in the yellowness index before and after UV irradiation are small, making it suitable for applications in environments where UV light may be exposed. On the other hand, the resin composition of Comparative Example is poor in one or more of terms of safety for cosmetics and food packaging applications, productivity, injection moldability, hue and light resistance of molded products, and the odor. In addition, if the yellowness index before UV irradiation or the change amount in the yellowness index before and after UV irradiation is large, it is not suitable for applications in environments where UV light may be exposed.

**Industrial Applicability**

The resin composition containing a copolymer P containing a styrene-based monomer unit and a (meth)acrylic acid ester-based monomer unit of the present invention has excellent safety and productivity for cosmetic and food packaging applications, injection moldability, and hue and light resistance of molded products, and a low odor. The resin composition of the present invention, for example, can be mixed with other resins to form a resin composition, which can then be suitably used as an injection molded product for a home appliance housing or a container for food, stationery, cosmetics and other applications, and has industrial applicability.

**Claims**

1.  A resin composition containing a copolymer containing a styrene-based monomer unit and a (meth)acrylic acid ester-based monomer unit, wherein:

    a total content of an unreacted monomer is 2000 mass ppm or less measured by gas chromatography analysis, a sulfur content is more than 0 mass ppm and 150 mass ppm or less measured by X-ray fluorescence analysis, and a yellowness index of a 2 mm thick injection molded plate measured in accordance with JIS K7105 is 0.6 or less, wherein the resin composition satisfies a relationship described below when the yellowness index of the 2 mm thick injection molded plate is taken as A, and a yellowness index of the plate after UV irradiation for 360 hours at an irradiation intensity of 60 W/m is taken as B:

$$B\text{-}A < 0.8.$$

2.  The resin composition of Claim 1, wherein 100000 times a reciprocal of a product of the total content of the unreacted monomer and the sulfur content (100000 / (the total content of the unreacted monomer $\times$ the sulfur content)) is 0.5 to 8.0.

3.  The resin composition of Claim 1 or 2, wherein a ratio of the total content of the unreacted monomer to the sulfur content (the total content of the unreacted monomer / the sulfur content) is 8 to 50.

4.  The resin composition of any one of Claims 1 to 3, wherein a MFR value under a condition of a test temperature of 200°C and a nominal load of 5 kg is 1 g/10 min to 5 g/10 min measured in accordance with JIS K-7210.

5.  The resin composition of any one of Claims 1 to 4, wherein 100 mass% of the copolymer comprises 20 to 80 mass% of the styrene-based monomer unit and 20 to 80 mass% of the (meth)acrylic acid ester-based monomer unit.

6.  The resin composition of any one of Claims 1 to 5, wherein the styrene-based monomer unit is styrene, and the (meth) acrylic acid ester-based monomer unit is methyl methacrylate.

7.  The resin composition of any one of Claims 1 to 6, wherein the sulfur content is 30 mass ppm or more.

8.  The resin composition of any one of Claims 1 to 7, wherein a total content of the styrene-based monomer unit and the (meth)acrylic acid ester-based monomer unit contained in 100 mass% of the copolymer is more than 96 mass%.

9.  The resin composition of any one of Claims 1 to 7, wherein:

    the copolymer further comprises an other copolymerizable monomer unit, a content of the other copolymerizable monomer unit is 0 to 10 mass% with respect to 100 mass% of a total of the styrene-based monomer unit, the (meth)acrylic acid ester-based monomer unit, and the other copolymerizable monomer unit, and the other copolymerizable monomer unit comprises one or more types selected from a group consisting of acrylic acid, acrylonitrile, methacrylonitrile, butyl acrylate, ethyl acrylate, methyl acrylate, phenylmaleimide, and cyclohexylmaleimide.

10. A method for producing the resin composition of any one of Claims 1 to 9,
    comprising polymerizing a styrene-based monomer and a (meth)acrylic acid ester-based monomer,
    wherein a linear alkyl mercaptan-based chain transfer agent and an $\alpha$-methylstyrene dimer chain transfer agent are used in combination in the polymerizing.

11. The method for producing the resin composition of Claim 10, wherein a ratio of an amount of the linear alkyl mercaptan-based chain transfer agent added to an amount of the $\alpha$-methylstyrene dimer chain transfer agent added is 0.08 to 0.25.

12. An injection molded body using the resin composition of any one of Claims 1 to 9.

13. A home appliance housing or a container for food, stationery, or cosmetics, using the injection molded body of Claim 12.

**Patentansprüche**

1. Harzzusammensetzung, die ein Copolymer enthält, das eine Monomereinheit auf Styrolbasis und eine Monomereinheit auf (Meth)acrylsäureesterbasis enthält, wobei:

   ein Gesamtgehalt an nicht umgesetztem Monomer 2000 Massen-ppm, gemessen durch Gaschromatographieanalyse, beträgt,
   ein Schwefelgehalt mehr als 0 Massen-ppm und 150 Massen-ppm oder weniger, gemessen durch Röntgenfluoreszenzanalyse, beträgt, und
   ein Vergilbungsindex einer 2 mm dicken Spritzgussplatte, gemessen gemäß JIS K7105, 0,6 oder weniger beträgt,
   wobei die Harzzusammensetzung eine nachstehend beschriebene Beziehung erfüllt, wenn der Vergilbungsindex der 2 mm dicken Spritzgussplatte als A bezeichnet wird und ein Vergilbungsindex der Platte nach einer UV-Bestrahlung für 360 Stunden bei einer Bestrahlungsintensität von 60 W/m als B bezeichnet wird:

   $$B\text{-}A < 0{,}8.$$

2. Harzzusammensetzung nach Anspruch 1, wobei das 100.000-Fache eines Kehrwerts eines Produkts aus dem Gesamtgehalt an nicht umgesetztem Monomer und dem Schwefelgehalt (100.000 / (Gesamtgehalt an nicht umgesetztem Monomer $\times$ Schwefelgehalt)) 0,5 bis 8,0 beträgt.

3. Harzzusammensetzung nach Anspruch 1 oder 2, wobei ein Verhältnis des Gesamtgehalts an nicht umgesetztem Monomer zum Schwefelgehalt (Gesamtgehalt an nicht umgesetztem Monomer / Schwefelgehalt) 8 zu 50 beträgt.

4. Harzzusammensetzung nach einem der Ansprüche 1 bis 3, wobei ein MFR-Wert unter einer Bedingung einer Testtemperatur von 200 °C und einer Nennlast von 5 kg 1 g/10 min bis 5 g/10 min, gemessen gemäß JIS K-7210, beträgt.

5. Harzzusammensetzung nach einem der Ansprüche 1 bis 4, wobei 100 Massen-% des Copolymers 20 bis 80 Massen-% der Monomereinheit auf Styrolbasis und 20 bis 80 Massen-% der Monomereinheit auf (Meth)acrylsäureesterbasis umfassen.

6. Harzzusammensetzung nach einem der Ansprüche 1 bis 5, wobei die Monomereinheit auf Styrolbasis Styrol ist und die Monomereinheit auf (Meth)acrylsäureesterbasis Methylmethacrylat ist.

7. Harzzusammensetzung nach einem der Ansprüche 1 bis 6, wobei der Schwefelgehalt 30 Massen-ppm oder mehr beträgt.

8. Harzzusammensetzung nach einem der Ansprüche 1 bis 7, wobei ein Gesamtgehalt der Monomereinheit auf Styrolbasis und der Monomereinheit auf (Meth)acrylsäureesterbasis, die in 100 Massen-% des Copolymers enthalten sind, mehr als 96 Massen-% beträgt.

9. Harzzusammensetzung nach einem der Ansprüche 1 bis 7, wobei:

das Copolymer ferner eine weitere copolymerisierbare Monomereinheit umfasst,
ein Gehalt der weiteren copolymerisierbaren Monomereinheit 0 bis 10 Massen-%, bezogen auf 100 Massen-% einer Gesamtheit der Monomereinheit auf Styrolbasis, der Monomereinheit auf (Meth)acrylsäureesterbasis und der weiteren copolymerisierbaren Monomereinheit, beträgt, und
die weitere copolymerisierbare Monomereinheit eine oder mehrere Arten umfasst, die ausgewählt sind aus einer Gruppe bestehend aus Acrylsäure, Acrylnitril, Methacrylnitril, Butylacrylat, Ethylacrylat, Methylacrylat, Phenylmaleimid und Cyclohexylmaleimid.

10. Verfahren zum Herstellen der Harzzusammensetzung nach einem der Ansprüche 1 bis 9,

umfassend Polymerisieren eines Monomers auf Styrolbasis und eines Monomers auf (Meth)acrylsäureesterbasis,
wobei während des Polymerisierens ein Kettenübertragungsmittel auf Basis von linearem Alkylmercaptan und ein $\alpha$-Methylstyrol-Dimer-Kettenübertragungsmittel in Kombination verwendet werden.

11. Verfahren zum Herstellen der Harzzusammensetzung nach Anspruch 10, wobei ein Verhältnis einer Menge des zugesetzten Kettenübertragungsmittels auf Basis von linearem Alkylmercaptan zu einer Menge des zugesetzten $\alpha$-Methylstyrol-Dimer-Kettenübertragungsmittels 0,08 zu 0,25 beträgt.

12. Spritzgusskörper unter Verwendung der Harzzusammensetzung nach einem der Ansprüche 1 bis 9.

13. Haushaltsgerätgehäuse oder Behälter für Lebensmittel, Schreibwaren oder Kosmetika unter Verwendung des Spritzgusskörpers nach Anspruch 12.

**Revendications**

1. Composition de résine contenant un copolymère contenant une unité monomère à base de styrène et une unité monomère à base d'ester d'acide (méth)acrylique, dans laquelle :

une teneur totale en monomère n'ayant pas réagi est inférieure ou égale à 2000 ppm en masse, mesurée par analyse par chromatographie en phase gazeuse,
une teneur en soufre est supérieure à 0 ppm en masse et inférieure ou égale à 150 ppm en masse, mesurée par analyse de fluorescence par rayons X, et
un indice de jaunissement d'une plaque moulée par injection de 2 mm d'épaisseur, mesuré conformément à la norme JIS K7105, est inférieur ou égal à 0,6,
dans laquelle la composition de résine satisfait à une relation décrite ci-dessous lorsque l'indice de jaunissement de la plaque moulée par injection de 2 mm d'épaisseur est pris comme A, et un indice de jaunissement de la plaque après irradiation UV pendant 360 heures à une intensité d'irradiation de 60 W/m est pris comme B :

$$B\text{-}A < 0,8.$$

2. Composition de résine de la revendication 1, dans laquelle 100000 fois une réciproque d'un produit de la teneur totale en monomère n'ayant pas réagi et de la teneur en soufre (100000 / (la teneur totale en monomère n'ayant pas réagi $\times$ la teneur en soufre)) est de 0,5 à 8,0.

3. Composition de résine de la revendication 1 ou 2, dans laquelle un rapport entre la teneur totale en monomère n'ayant pas réagi et la teneur en soufre (la teneur totale en monomère n'ayant pas réagi / la teneur en soufre) est compris entre 8 et 50.

4. Composition de résine de l'une quelconque des revendications 1 à 3, dans laquelle une valeur MFR dans une condition de température d'essai de 200 °C et une charge nominale de 5 kg est de 1 g/10 min à 5 g/10 min mesurée conformément à la norme JIS K-7210.

**5.** Composition de résine de l'une quelconque des revendications 1 à 4, dans laquelle 100 % en masse du copolymère comprend 20 à 80 % en masse de l'unité monomère à base de styrène et 20 à 80 % en masse de l'unité monomère à base d'ester d'acide (méth)acrylique.

**6.** Composition de résine de l'une quelconque des revendications 1 à 5, dans laquelle l'unité monomère à base de styrène est le styrène, et l'unité monomère à base d'ester d'acide (méth)acrylique est le méthacrylate de méthyle.

**7.** Composition de résine de l'une quelconque des revendications 1 à 6, dans laquelle la teneur en soufre est égale ou supérieure à 30 ppm en masse.

**8.** Composition de résine de l'une quelconque des revendications 1 à 7, dans laquelle une teneur totale de l'unité monomère à base de styrène et de l'unité monomère à base d'ester d'acide (méth)acrylique contenue dans 100 % en masse du copolymère est supérieure à 96 % en masse.

**9.** Composition de résine de l'une quelconque des revendications 1 à 7, dans laquelle :

le copolymère comprend en outre une autre unité monomère copolymérisable,
la teneur de l'autre unité monomère copolymérisable est de 0 à 10 % en masse par rapport à 100 % en masse d'un total de l'unité monomère à base de styrène, de l'unité monomère à base d'ester d'acide (méth)acrylique et de l'autre unité monomère copolymérisable, et
l'autre unité monomère copolymérisable comprend un ou plusieurs types choisis dans un groupe constitué par l'acide acrylique, l'acrylonitrile, le méthacrylonitrile, l'acrylate de butyle, l'acrylate d'éthyle, l'acrylate de méthyle, le phénylmaléimide et le cyclohexylmaléimide.

**10.** Procédé de fabrication de la composition de résine de l'une quelconque des revendications 1 à 9,

comprenant la polymérisation d'un monomère à base de styrène et d'un monomère à base d'ester d'acide (méth) acrylique,
dans lequel un agent de transfert de chaîne à base de mercaptan d'alkyle linéaire et un agent de transfert de chaîne à base de dimère d'a-méthylstyrène sont utilisés en combinaison dans la polymérisation.

**11.** Procédé de fabrication de la composition de résine de la revendication 10, dans lequel un rapport entre une quantité d'agent de transfert de chaîne à base de mercaptan d'alkyle linéaire ajoutée et une quantité d'agent de transfert de chaîne à base de dimère d'a-méthylstyrène ajoutée est compris entre 0,08 et 0,25.

**12.** Corps moulé par injection utilisant la composition de résine de l'une quelconque des revendications 1 à 9.

**13.** Boîtier d'appareil ménager ou récipient pour aliments, articles de papeterie ou cosmétiques, utilisant le corps moulé par injection de la revendication 12.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 200126616 A
- JP 200131046 A
- JP 2002212233 A

- JP 2001026619 A
- US 5980790 A
- US 2016355625 A1